# EUROPEAN PATENT APPLICATION

(11) **EP 4 207 920 A1**
(43) Date of publication of application: **05.07.2023**
(21) Application number: 21877954.4
(22) Date of filing: 05.10.2021
(51) Int. Cl.: H04W 74/00, H04W 74/08, H04W 76/15, H04W 84/12, H04W 88/06

(54) **METHOD AND DEVICE FOR NON-STR OPERATION IN COMMUNICATION SYSTEM SUPPORTING MULTIPLE LINKS**

(30) Priority: 05.10.2020 KR 20200128032
(71) Applicant: HYUNDAI MOTOR COMPANY, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2021/013626
(87) International publication number: WO 2022/075703

(57) **Abstract**

A method and a device for a non-STR operation in a communication system supporting multiple links are disclosed. An operating method of a device comprises the steps of: receiving, from an AP, a first frame including configuration information about a TWT SP in a first link from among multiple links; transmitting, to an STA, a second frame including configuration information about a QTP overlapping with the TWT SP in a second link from among the multiple links; and communicating with the AP within the TWT SP configured in the first link.

## Description

### TECHNICAL FIELD

The present disclosure relates to a wireless local area network (LAN) communication technique, and more particularly, to a technique for supporting non-simultaneous transmit and receive (NSTR) operations in a communication system supporting multiple links.

### BACKGROUND

Recently, as the spread of mobile devices expands, a wireless local area network (LAN) technology capable of providing fast wireless communication services to mobile devices is in the spotlight. The wireless LAN technology may be a technology that supports mobile devices, such as smart phones, smart pads, laptop computers, portable multimedia players, embedded devices, and the like, to wirelessly access the Internet based on wireless communication technology.

The standards using the wireless LAN technology are being standardized as IEEE802.11 standards mainly in the Institute of Electrical and Electronics Engineers (IEEE). As the above-described wireless LAN technologies have been developed and spread, applications using the wireless LAN technologies have been diversified, and a demand for a wireless LAN technology supporting a higher throughput has arisen. Accordingly, a frequency bandwidth (e.g., `maximum 160 MHz bandwidth' or `80+80 MHz bandwidth') used in the IEEE 802.11ac standard has been expanded, and the number of supported spatial streams has also increased. The IEEE 802.11ac standard may be a very high throughput (VHT) wireless LAN technology supporting a high throughput of 1 gigabit per second (Gbps) or more. The IEEE 802.11ac standard can support downlink transmission for multiple stations by utilizing the MIMO techniques.

As applications requiring higher throughput and applications requiring real-time transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

However, since multi-link operations are operations not defined in the existing wireless LAN standard, it may be necessary to define detailed operations according to an environment in which the multi-link operations are performed. In particular, in order to transmit data through multiple links, a channel access method may be required in each link. In addition, a method for transmitting and receiving data for a communication node supporting low-power operations may also be required.

Meanwhile, the technologies that are the background of the present disclosure are written to improve the understanding of the background of the present disclosure and may include content that is not already known to those of ordinary skill in the art to which the present disclosure belongs.

### SUMMARY

### Technical Problem

The present disclosure is directed to providing a method and an apparatus for supporting non-simultaneous transmit and receive (NSTR) operations in a communication system supporting multiple links.

### Technical Solution

An operation method of a device, according to a first embodiment of the present disclosure for achieving the above-described objective, may comprise configuring a target wake time (TWT) based on a TWT service period (SP) in a first link of the multi-link. The operation method of the device may also comprise transmitting a first frame including information of a first period in which transmission is prohibited in a second link of the multi-link. The operation method of the device may also comprise performing communication within the TWT SP configured in the first link. The first period overlaps with the TWT SP, and communication is not performed within the first period configured in the second link.

A pair of the first link and the second link may be a non-simultaneous transmit and receive (NSTR) link pair.

The information of the first period may be configuration information of a quiet time period (QTP). The configuration information of the QTP may include at least one of information indicating a link in which the QTP is configured, information on a start time of the QTP, information on an end time of the QTP, or information on a length of the QTP.

The information of the first period may be duration information used to set a network allocation vector (NAV) in the second link.

The first period may include a start time of the TWT SP.

The operation method may further comprise, when communication is terminated within the TWT SP and the first period is not terminated, transmitting a second frame indicating early termination of the first period through the second link.

A device according to a second embodiment of the present disclosure for achieving the above-described objective may comprise a processor and a memory storing at least one instruction executable by the processor. The at least one instruction is executed to configure a target wake time (TWT) based on a TWT service period (SP) in a first link of the multi-link. The at least one instruction is also executed to transmit a first frame including information of a first period in which transmission is prohibited in a second link of the multi-link. The at least one instruction is also executed to perform communication within the TWT SP configured in the first link. The first period overlaps with the TWT SP, and communication is not performed within the first period configured in the second link.

A pair of the first link and the second link may be a non-simultaneous transmit and receive (NSTR) link pair.

The information of the first period may be configuration information of a quiet time period (QTP). The configuration information of the QTP may include at least one of information indicating a link in which the QTP is configured, information on a start time of the QTP, information on an end time of the QTP, or information on a length of the QTP.

The information of the first period may be duration information used to set a network allocation vector (NAV) in the second link.

The first period may include a start time of the TWT SP.

The at least one instruction may be further executed to, when communication is terminated within the TWT SP and the first period is not terminated, transmit a second frame indicating early termination of the first period through the second link.

### Advantageous Effects

According to the present disclosure, when a frequency separation between multiple links is not large, simultaneous transmit and receive (STR) operations may not be performed depending on a link use state. For example, when a pair of first and second links is a non-STR (NSTR) link pair and a target wake time (TWT) service period (SP) is configured in the first link, a quiet time period (QTP) may be configured in the second link to protect communication within the TWP SP. The QTP may overlap with the TWT SP, and communication within the QTP may be prohibited. Accordingly, communication in the first link can be protected, and the multiple links can be effectively managed.

### DESCRIPTION OF DRAWINGS

FIG. 1 is a block diagram illustrating a first embodiment of a communication node constituting a wireless local area network (LAN) system.
FIG. 2 is a conceptual diagram illustrating a first embodiment of multi-links configured between multi-link devices (MLDs).
FIG. 3 is a sequence chart illustrating a first embodiment of a negotiation procedure for a multi-link operation in a wireless LAN system.
FIG. 4 is a conceptual diagram illustrating a first embodiment of a communication method in a wireless LAN system supporting multiple links.
FIG. 5 is a timing diagram illustrating a first embodiment of a communication method in a non-simultaneous transmit and receive (NSTR) link in a wireless LAN system supporting multiple links.
FIG. 6 is a timing diagram illustrating a second embodiment of a communication method in an NSTR link in a wireless LAN system supporting multiple links.
FIG. 7 is a timing diagram illustrating a third embodiment of a communication method in an NSTR link in a wireless LAN system supporting multiple links.
FIG. 8 is a timing diagram illustrating a fourth embodiment of a communication method in an NSTR link in a wireless LAN system supporting multiple links.
FIG. 9 is a block diagram illustrating a first embodiment of a QTP frame.

### DETAILED DESCRIPTION

Since the present disclosure may be variously modified and have several forms, specific embodiments are shown in the accompanying drawings and are described in the detailed description. It should be understood, however, that it is not intended to limit the present disclosure to the specific embodiments. On the contrary, the present disclosure is intended to cover all modifications and alternatives falling within the spirit and scope of the present disclosure.

Relational terms, such as first, second, and the like, may be used for describing various elements, but the elements should not be limited by the terms. These terms are only used to distinguish one element from another. For example, a first component may be named as a second component without departing from the scope of the present disclosure, and the second component may also be similarly named as the first component. The term "and/or" means any one or a combination of a plurality of related and described items.

In embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it should be understood that a further component is not disposed therebetween.

The terms used in the present disclosure are only used to describe specific embodiments and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists. However, it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings consistent with contextual meanings in the art. In this description, unless defined clearly, terms are not necessarily construed as having formal meanings.

Hereinafter, forms of the present disclosure are described in detail with reference to the accompanying drawings. In describing the disclosure, to facilitate the entire understanding of the disclosure, like numbers refer to like elements throughout the description of the figures and the repetitive description thereof has been omitted.

In the following, a wireless communication system to which embodiments according to the present disclosure are applied is described. The wireless communication system to which the embodiments according to the present disclosure are applied is not limited to the contents described below, and the embodiments according to the present disclosure can be applied to various wireless communication systems. A wireless communication system may be referred to as a `wireless communication network'.

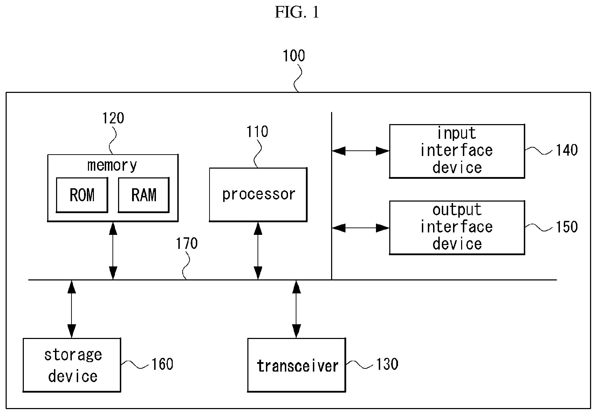

FIG. 1 is a block diagram illustrating a first embodiment of a communication node constituting a wireless local area network (LAN) system.

As shown in FIG. 1, a communication node 100 may be an access point, a station, an access point (AP) multi-link device (MLD), or a non-AP MLD. The access point may refer to an AP, and the station may refer to a STA or a non-AP STA. The operating channel width supported by the access point may be 20 megahertz (MHz), 80 MHz, 160 MHz, or the like. The operating channel width supported by the station may be 20MHz, 80MHz, or the like.

The communication node 100 may include at least one processor 110, a memory 120, and a plurality of transceivers 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, or the storage device 160 through a dedicated interface.

The processor 110 may execute at least one instruction stored in at least one of the memory 120 or the storage device 160. The processor 110 may refer to a central processing unit (CPU), a graphics processing unit (GPU), or a dedicated processor on which the methods according to the embodiments of the present disclosure are performed. Each of the memory 120 and the storage device 160 may be configured as at least one of a volatile storage medium or a nonvolatile storage medium. For example, the memory 120 may be configured with at least one of a read only memory (ROM) or a random access memory (RAM).

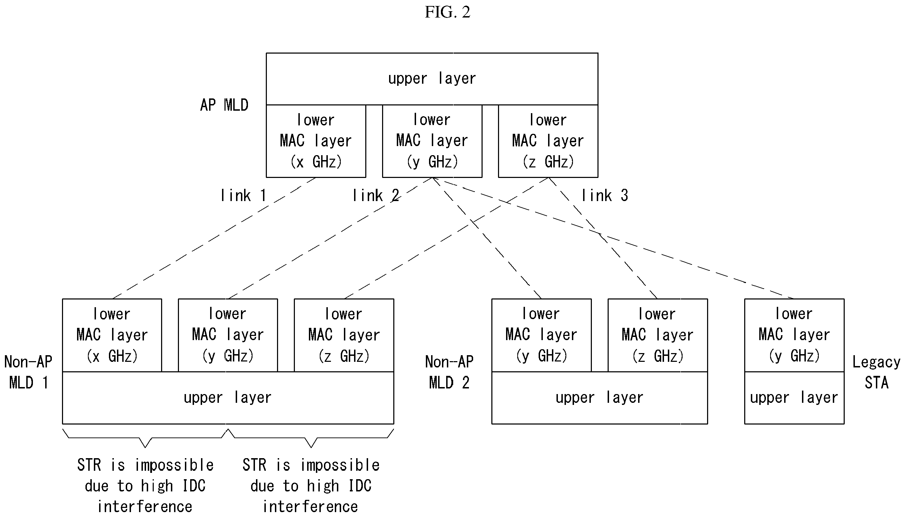

FIG. 2 is a conceptual diagram illustrating a first embodiment of multi-links configured between MLDs.

As shown in FIG. 2, an MLD may have one medium access control (MAC) address. In embodiments, the MLD may mean an AP MLD and/or a non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) (STA(s)) affiliated with the non-AP MLD may have different MAC addresses. Each of the Aps having different MAC addresses may be in charge of each link among multiple links supported by the AP MLD and may perform a role of an independent AP.

Each of the STAs having different MAC addresses may be in charge of each link among multiple links supported by the non-AP MLD and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In embodiments, a link may mean a channel or a band. A device that does not support the STR operation may be referred to as a non-simultaneous transmit and receive (NSTR) AP MLD or an NSTR non-AP MLD (or NSTR STA MLD).

The MLD may transmit and receive frames in multiple links (i.e., multi-link) by using a non-contiguous bandwidth extension scheme (e.g., 80 MHz + 80 MHz). The multi-link operation may include multi-band transmission. The AP MLD may include a plurality of Aps, and the plurality of Aps may operate in different links. Each of the plurality of Aps may perform function(s) of a lower MAC layer. Each of the plurality of Aps may be referred to as a `communication node' or `lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a `communication node' or `lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band and may perform communications using a 160 MHz bandwidth according to a channel expansion scheme in a 5 GHz band. The MLD may perform communications using a 160 MHz bandwidth in the 5 GHz band and may perform communications using a 160 MHz bandwidth in a 6 GHz band. One frequency band (e.g., one channel) used by the MLD may be defined as one link. In another embodiment, a plurality of links may be configured in one frequency band used by the MLD. For example, the MLD may configure one link in the 2.4 GHz band and two links in the 6 GHz band. The respective links may be referred to as a first link, a second link, and a third link. In another embodiment, the respective links may be referred to as a link 1, a link 2, and a link 3. A link number may be set by the AP, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between the link 1 and the link 2 in the frequency domain) is sufficient, the MLD may perform an STR operation. For example, the MLD may transmit a physical layer convergence procedure (PLCP) protocol data unit (PPDU) 1 using the link 1 among multiple links and may receive a PPDU 2 using the link 2 among multiple links. On the other hand, if the MLD performs the STR operation when the band separation between multiple links is insufficient, in-device coexistence (IDC) interference, which is interference between the multiple links, may occur. Therefore, a link pair with insufficient band separation between multiple links may be a non-STR link pair, and the MLD may operate as a non-STR MLD (e.g., non-STR non-AP (STA) MLD or non-STR AP MLD) that is not capable of STR operations. The AP included in the non-STR AP MLD may be a soft AP. The embodiments below may be performed by the AP (e.g., AP included in the STR AP MLD) as well as a soft AP (e.g., AP included in the non-STR AP MLD).

For example, a multi-link including a link 1, a link 2, and a link 3 may be configured between the AP MLD and the non-AP MLD (e.g., non-AP MLD 1 and non-AP MLD 2). If the band separation between the link 1 and the link 3 is sufficient, the AP MLD may perform an STR operation using the link 1 and the link 3. In other words, the AP MLD may transmit a frame using the link 1 and may receive a frame using the link 3. If the band separation between the link 1 and the link 2 is not sufficient, the link 1 and the link 2 may be a non-STR link pair, and the AP MLD or STA MLD may not be able to perform an STR operation using the link 1 and the link 2. If the band separation between the links 2 and 3 is not sufficient, the AP MLD or the STA MLD may not be able to perform an STR operation using the link 2 and 3. A link pair that affects IDC interference may be referred to as `non-simultaneous transmit and receive (NSTR) link pair' or `NSTR pair'

Meanwhile, in a wireless LAN system, a negotiation procedure for a multi-link operation may be performed in an access procedure between a STA and an AP.

A device (e.g., AP or STA) supporting a multi-link may be referred to as a multi-link device (MLD). An AP supporting a multi-link may be referred to as an AP MLD, and a STA supporting a multi-link may be referred to as a non-AP MLD or STA MLD. The AP MLD may have a physical address (e.g., MAC address) for each link. The AP MLD may be implemented as if an AP in charge of each link exists separately. A plurality of Aps may be managed within one AP MLD. Accordingly, coordination between the plurality of Aps belonging to the same AP MLD may be possible. The STA MLD may have a physical address (e.g., MAC address) for each link. The STA MLD may be implemented as if an STA in charge of each link exists separately. A plurality of STAs may be managed within one STA MLD. Accordingly, coordination between the plurality of STAs belonging to the same STA MLD may be possible.

For example, an AP1 of the AP MLD and a STA1 of the STA MLD may each be in charge of a first link and may communicate using the first link. An AP2 of the AP MLD and a STA2 of the STA MLD may each be in charge of a second link and may communicate using the second link. The STA2 may receive state change information for the first link in the second link. In this case, the STA MLD may collect information (e.g., state change information) received from each link and may control operations performed by the STA1 based on the collected information.

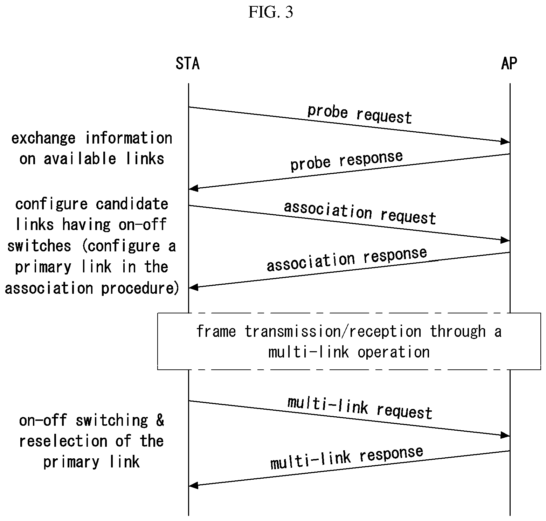

FIG. 3 is a sequence chart illustrating a first embodiment of a negotiation procedure for a multi-link operation in a wireless LAN system.

As shown in FIG. 3 an access procedure between an STA and an AP in an infrastructure basic service set (BSS) may generally be divided into a probe step of probing AP(s), an authentication step for authentication between the STA and the probed AP, and an association step of association between the STA and the authenticated AP.

In the probe step, the STA may detect one or more Aps using a passive scanning scheme or an active scanning scheme. When the passive scanning scheme is used, the STA may detect one or more Aps by overhearing beacons transmitted by the one or more Aps. When the active scanning scheme is used, the STA may transmit a probe request frame and may detect one or more Aps by receiving probe response frames that are responses to the probe request frame from the one or more Aps.

When the one or more Aps are detected, the STA may perform an authentication step with the detected AP(s). In this case, the STA may perform the authentication step with a plurality of Aps. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard and may complete authentication with the AP by receiving an authentication response frame that is a response to the authentication request frame from the AP.

When the authentication with the AP is completed, the STA may perform an association step with the AP. In particular, the STA may select one AP among AP(s) with which the STA has performed the authentication step and may perform the association step with the selected AP. In other words, the STA may transmit an association request frame to the selected AP and may complete the association with the AP by receiving an association response frame that is a response to the association request frame from the selected AP.

Meanwhile, a multi-link operation may be supported in the wireless LAN system. A multi-link device (MLD) may include one or more STAs affiliated with the MLD. The MLD may be a logical entity. The MLD may be classified into an AP MLD and a non-AP MLD. Each STA affiliated with the AP MLD may be an AP, and each STA affiliated with the non-AP MLD may be a non-AP STA. In order to configure a multi-link, a multi-link discovery procedure, a multi-link setup procedure, and the like may be performed. The multi-link discovery procedure may be performed in the probe step between an STA and an AP. In this case, multi-link information elements (ML Ies) may be included in the beacon frame, the probe request frame, and/or the probe response frame.

For example, in order to perform a multi-link operation, in the probe step, the AP (e.g., AP affiliated with an MLD) may exchange information indicating whether the multi-link operation can be used and information on available link(s) with the STA (e.g., non-AP STA affiliated with an MLD). In a negotiation procedure for the multi-link operation (e.g., multi-link setup procedure), the STA may transmit information of link(s) to be used for the multi-link operation. The negotiation procedure for the multi-link operation may be performed in the access procedure (e.g., association step) between the STA and the AP. Also, information element(s) required for the multi-link operation may be configured or changed by an action frame in the negotiation procedure.

In addition, in the access procedure (e.g., association step) between the STA and the AP, available link(s) of the AP may be configured, and an identifier (ID) may be assigned to each link. Thereafter, in the negotiation procedure and/or change procedure for the multi-link operation, information indicating whether each link is activated may be transmitted, and the information may be expressed using the link ID(s).

The information indicating whether the multi-link operation can be used may be transmitted and received in a procedure of exchanging capability information element(s) (e.g., EHT capability information element(s)) between the STA and the AP. The capability information element(s) may include information of supporting band(s), information of supporting link(s) (e.g., ID(s) and/or number of supporting link(s)), information of links capable of simultaneous transmission and reception (STR) operations (e.g., information on bands of the links, information on a separation between the links), and/or the like. In addition, the capability information element(s) may include information that individually indicates a link capable of the STR operation.

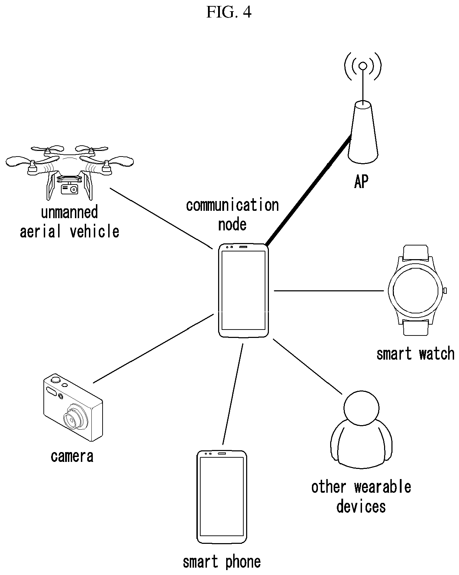

FIG. 4 is a conceptual diagram illustrating a first embodiment of a communication method in a wireless LAN system supporting multiple links.

As shown in FIG. 4, a communication node (e.g., smart phone) may be an MLD capable of transmitting and receiving frames using a plurality of links (e.g., first link, second link, and third link). The MLD may be classified into a non-AP MLD and an AP MLD. The non-AP MLD may include STA(s) each of which is composed of a physical layer and a MAC layer (e.g., data link layer), and the STA may be configured for each link. The STAs included in the MLD may use different MAC addresses. The AP MLD may include AP(s) each of which is composed of a physical layer and a MAC layer (e.g., data link layer), and the AP may be configured for each link. The Aps included in the MLD may use different MAC addresses. One MLD (e.g., non-AP MLD or AP MLD) may control a plurality of STAs or a plurality of Aps. The non-AP MLD may be referred to as `STA MLD'. An STA MLD supporting a hot spot function may operate like an AP MLD. In this case, an STA MLD serving as an AP MLD may be referred to as `soft AP MLD'. The soft AP MLD may mean a `software enabled AP'.

A communication node supporting a multi-link may be associated with an AP and may perform a role of an AP (e.g., relay role). In other words, the communication node may operate as a soft AP. A wireless LAN device (e.g., unmanned aerial vehicle, camera, smart phone, smart watch, or other wearable devices) may communicate with a communication node (i.e., soft AP) located in a short distance instead of an AP located in a remote area. Thus, low-power communication and/or high-capacity communication can be performed. A communication node associated with an AP may operate as an STA as well as an AP. Accordingly, the communication node may deliver data received from the wireless LAN device to the AP. In other words, the communication node may operate as a relay. The communication node (i.e., soft AP) may be an MLD capable of performing a role of an AP MLD and a role of an STA MLD. The communication node may not be able to perform STR operations in a specific link pair due to interference between links. In other words, an NSTR link pair may exist.

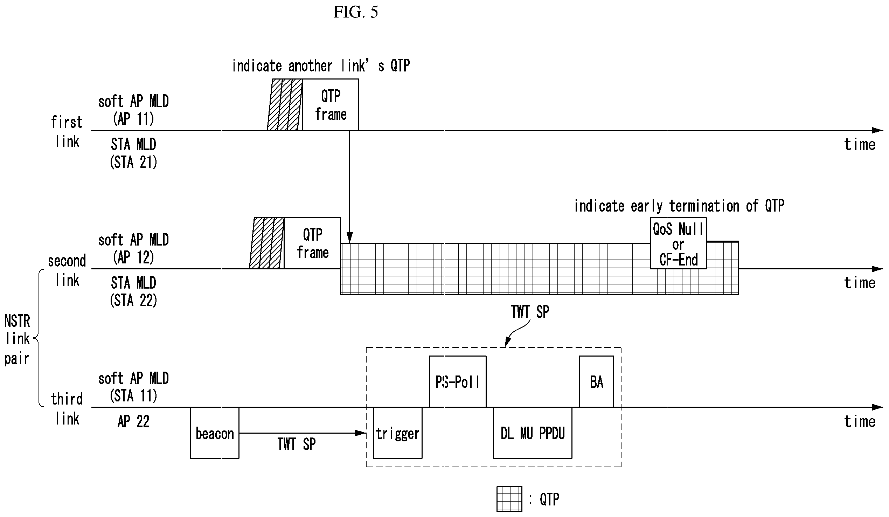

FIG. 5 is a timing diagram illustrating a first embodiment of a communication method in an NSTR link in a wireless LAN system supporting multiple links.

As shown in FIG. 5, a soft AP MLD may support multiple links (e.g., first link, second link, and third link) and may perform AP functions and STA functions. A link in which the soft AP MLD performing AP functions operates may be the same as a link in which the soft AP MLD performing STA functions operates. In another embodiment, the link in which the soft AP MLD performing AP functions operates may be different from the link in which the soft AP MLD performing STA functions operates. The soft AP MLD may perform AP functions in the first link and the second link. In the first link, the soft AP MLD may operate as an AP 11, and in the second link, the soft AP MLD may operate as an AP 12. The soft AP MLD may perform STA functions in the third link. In the third link, the soft AP MLD may operate as an STA 11. A pair of the second link and the third link may be an NSTR link pair. Therefore, the soft AP MLD may not be able to perform STR operations in the second link and the third link.

The AP 11 of the soft AP MLD may be associated with an STA 21 of the STA MLD in the first link, and the AP 12 of the soft AP MLD may be associated with an STA 22 of the STA MLD in the second link. In the third link, the STA 11 of the soft AP MLD may be associated with the AP 22. The STA 11 operating in the third link may know a target wake time (TWT) service period (SP) of the AP 22. Configuration information of the TWT SP may be transmitted through a management frame (e.g., beacon frame). In the third link, the AP 22 may transmit a beacon frame indicating that data to be transmitted to the STA 11 within the TWT SP exists. The STA 11 may receive the beacon frame from the AP 22 and may identify that data to be transmitted to the STA 11 within the TWT SP exists based on information included in the beacon frame. In another embodiment, an AP 13 of the AP MLD may configure a TWT based on the TWT SP in the third link. For example, the AP 13 of the AP MLD may transmit a management frame including configuration information of the TWT SP in the third link. In this case, the TWT SP in the third link may be configured by the AP 13 of the AP MLD instead of the AP 22. The AP 13 may be the STA 11 performing AP functions in FIG. 5.

In the above-described cases, since the STA 11 needs to perform a data reception operation during the TWT SP, the TWT SP may be an NSTR period in the third link having an NSTR relationship with the second link. The NSTR period may mean a period in which STR operations are impossible. The STR operations may be impossible even in a period of the second link, which corresponds to the TWT SP configured in the third link.

When another communication node transmits a frame in the NSTR link pair during the TWT SP, the frame of the another communication node may collide with another frame transmitted in the third link, and a transmission error may occur due to the collision between the frames. Therefore, it may be desirable that transmission operations of other communication nodes are not performed during the TWT SP. Since the soft AP MLD operates as Aps in the first link and the second link at a start time of the TWT SP of the third link, the soft AP MLD may transmit a frame (e.g., action frame) including information on a quiet time period (QTP) requesting transmission prohibition during the TWT SP of the third link through the first link and the second link. The frame including QTP information may be referred to as `QTP frame'. The QTP frame may be a High Efficiency (HE) action frame, beacon frame, or probe response frame. The QTP frame may be transmitted in a broadcast manner. The QTP frame may include link indication information (e.g., link indicator) and/or QTP information for each link. The link indication information may indicate a link (e.g., second link) for which transmission prohibition is requested. The soft AP MLD may transmit the QTP frame after performing a channel access operation in each link.

The QTP may start from a transmission time (e.g., transmission start time or transmission end time) of the QTP frame. The QTP may overlap with the TWT SP configured in the third link. At least one of start time information, length information, or end time information of the QTP may be included in the QTP frame. The soft AP MLD may transmit the QTP frames at the same time point or different time points in the first link and the second link. The above-described transmission operation of the QTP frame may be performed without performing a negotiation procedure (e.g., a procedure for configuring the QTP and a procedure for transmitting the QTP frame) between the soft AP MLD and other communication nodes (e.g., STAs). The soft AP MLD may transmit the QTP frame even when there is no request for transmission of the QTP frame. In other words, the QTP frame may be transmitted in an unsolicited manner.

The STA MLD (e.g., STA 21 and STA 22) may receive the QTP frames from the soft AP MLD in the first link and the second link and may identify the QTP and the link to which the QTP is applied (e.g., second link) based on information included in the QTP frame. The STA MLD may not perform a transmission operation during the QTP in the second link indicated by the QTP frame. In other words, the STA MLD may regard the QTP in the second link as a period for which a network allocation vector (NAV) is set. For example, the NAV may be set based on a value of a duration field included in the QTP frame. The length of the QTP configured in the second link may be greater than or equal to the length of the TWT SP configured in the third link. When the STA 22 of the STA MLD performs low-power operations in the second link, the STA 22 may not be able to receive the QTP frame. In this case, since the STA 21 of the STA MLD receives the QTP frame in the first link, the STA 22 may identify that the QTP is configured in the second link based on the QTP frame received in the first link. Therefore, the STA 22 of the STA MLD may not perform a transmission operation during the QTP in the second link. The STA 22 supporting low-power operations may operate in a sleep mode during the QTP in the second link.

The STA 11 of the soft AP MLD may perform a reception operation during the TWT SP of the third link to receive data from the AP 22. In the third link, the TWP SP may be a TWT SP enabled by a trigger. In this case, the AP 22 may transmit a trigger frame to enable the TWT SP within the corresponding TWT SP of the third link. The STA 11 of the soft AP MLD may perform a monitoring operation for the trigger frame in the TWT SP of the third link. When the trigger frame is received from the AP 22, the STA 11 may transmit a power saving (PS)-Poll frame to the AP 22 in response to the trigger frame. When the PS-Poll frame is received from the STA 11, the AP 22 may transmit data (e.g., DL MU PPDU) stored in its own buffer to the STA 11. When the data is received from the AP 22, the STA 11 may transmit ACK (e.g., block ACK (BA)) for the data to the AP 22.

In the third link, the TWP SP may not be a TWT SP enabled by a trigger. In this case, the STA 11 may transmit a PS-Poll frame to the AP 22 by performing a channel contention operation in the TWT SP of the third link. When the PS-Poll frame is received from the STA 11, the AP 22 may transmit data (e.g., DL MU PPDU) stored in its own buffer to the STA 11. When the data is received from the AP 22, the STA 11 may transmit ACK (e.g., BA) for the data to the AP 22.

The above-described operations (e.g., transmission and reception of the data frame between the STA 11 and the AP 22) may be performed within the TWT SP of the third link. If an end time of the transmission/reception operation of the data frame in the third link is earlier than an end time of the QTP in the second link, the soft AP MLD may early terminate the QTP in the second link. For example, the AP 12 of the soft AP MLD may notify that the QTP of the second link is early terminated by transmitting a QoS Null frame, CF-End frame, or QTP frame indicating that QTP is 0 (e.g., duration = 0) through the second link. In addition, the AP 11 of the soft AP MLD may notify that the QTP of the second link is early terminated by transmitting a QoS Null frame, CF-End frame, or QTP frame indicating that QTP is 0 through the first link. The STA MLD may receive the QoS Null frame, CF-End frame, or QTP frame indicating that QTP is 0 through the first link and/or the second link, and based on the received frame, the STA MLD may determine that the QTP in the second link is early terminated.

The embodiment shown in FIG. 5 may be applied to not only downlink communication (e.g., downlink communication between the soft AP MLD performing AP functions and the STA) but also uplink communication (e.g., the soft AP MLD performing STA functions and the AP).

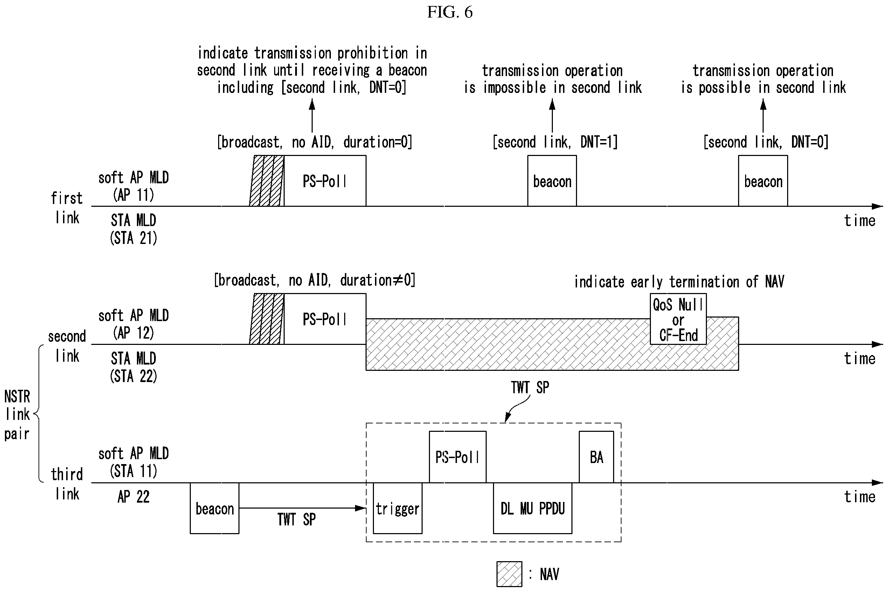

FIG. 6 is a timing diagram illustrating a second embodiment of a communication method in an NSTR link in a wireless LAN system supporting multiple links.

As shown in FIG. 6, a soft AP MLD may support multiple links (e.g., first link, second link, and third link) and may perform AP functions and STA functions. A link in which the soft AP MLD performing AP functions operates may be the same as a link in which the soft AP MLD performing STA functions operates. In another embodiment, the link in which the soft AP MLD performing AP functions operates may be different from the link in which the soft AP MLD performing STA functions operates. The soft AP MLD may perform AP functions in the first link and the second link. In the first link, the soft AP MLD may operate as an AP 11, and in the second link, the soft AP MLD may operate as an AP 12. The soft AP MLD may perform STA functions in the third link. In the third link, the soft AP MLD may operate as an STA 11. A pair of the second link and the third link may be an NSTR link pair. Therefore, the soft AP MLD may not be able to perform STR operations in the second link and the third link.

The AP 11 of the soft AP MLD may be associated with an STA 21 of the STA MLD in the first link, and the AP 12 of the soft AP MLD may be associated with an STA 22 of the STA MLD in the second link. In the third link, the STA 11 of the soft AP MLD may be associated with the AP 22. The STA 11 operating in the third link may know a TWT SP of the AP 22. Configuration information of the TWT SP may be transmitted through a management frame (e.g., beacon frame). In the third link, the AP 22 may transmit a beacon frame indicating that data to be transmitted to the STA 11 within the TWT SP exists. The STA 11 may receive the beacon frame from the AP 22 and may identify that data to be transmitted to the STA 11 within the TWT SP exists based on information included in the beacon frame. In another embodiment, the AP 13 of the AP MLD may configure a TWT based on the TWT SP in the third link. For example, the AP 13 of the AP MLD may transmit a management frame including configuration information of the TWT SP through the third link. In this case, the TWT SP in the third link may be configured by the AP 13 of the AP MLD instead of the AP 22. The AP 13 may be the STA 11 performing AP functions in FIG. 6.

In the above-described cases, since the STA 11 needs to perform a data reception operation during the TWT SP, the TWT SP may be an NSTR period in the third link having an NSTR relationship with the second link. The NSTR period may mean a period in which STR operations are impossible. The STR operations may be impossible even in a period of the second link, which corresponds to the TWT SP configured in the third link.

When another communication node transmits a frame in the NSTR link pair during the TWT SP, the frame of the another communication node may collide with another frame transmitted in the third link, and a transmission error may occur due to the collision between the frames. Therefore, it may be desirable that transmission operations of other communication nodes are not performed during the TWT SP. Before a start time of the TWT SP in the third link, the soft AP MLD may transmit a PS-Poll frame including duration information instead of an association identifier (AID) through the first link and/or the second link. A destination address of the PS-Poll frame may be set to a broadcast address or a multicast address, and an AID/duration field included in the PS-Poll frame may indicate a duration instead of an AID.

The STA 22 of the STA MLD may receive the PS-Poll frame from the AP 12. When the duration indicated by the PS-Poll frame is not 0, the STA 22 may set a NAV corresponding to the corresponding duration in the second link. The duration may be set to a time required for the soft AP MLD transmitting the PS-Poll frame. The STA 21 of the STA MLD may receive the PS-Poll frame from the AP 11. When the duration indicated by the PS-Poll frame is 0, the STA 21 may not set a NAV in the first link. In this case, the STA 21 may determine whether a transmission operation is possible in another link (e.g., NSTR link) based on an information element included in a beacon frame (or probe response frame) received from the AP 11. Therefore, the STA MLD (e.g., STA 21) may not be able to perform a transmission operation in another link until a beacon frame (or probe response frame) indicating that a transmission operation is possible in another link is received.

The beacon frame (or probe response frame) may include an indicator indicating whether a transmission operation is possible in each of links. For example, the beacon frame (or probe response frame) may include [link identifier (ID), 'do not transmit (DNT)'] for each of links. The link identifier may be used to indicate each link. The DNT set to a first value (e.g., 1) may indicate that a transmission operation is impossible in a link indicated by a link identifier associated with the corresponding DNT. The DNT set to a second value (e.g., 0) may indicate that a transmission operation is possible in a link indicated by a link identifier associated with the corresponding DNT. The DNT may be set when a transmission operation in one link causes interference on another link depending on a state of an NSTR link pair.

In the embodiment shown in FIG. 6, the soft AP MLD may perform operations to protect communication in the TWT SP of the third link. For example, the AP 11 operating in the first link may transmit a PS-Poll frame indicating a duration set to 0 before a start time of the TWT SP of the third link, may transmit a beacon frame including [link ID = second link, DNT = 1] in a time period corresponding to the TWT SP of the third link, and may transmit a beacon frame including [link ID = second link, DNT = 0] after an end time of the TWT SP of the third link. The STA 21 operating in the first link may receive the PS-Poll frame from the AP 11 and may identify that the duration indicated by the PS-Poll frame is 0. In this case, the STA 21 may not set a NAV in the first link and may perform a reception operation of the beacon frame of the AP 11. Here, when a destination address of the PS-Poll frame is a broadcast address or a multicast address, the STA 21 may interpret an AID/duration field included in the PS-Poll frame as a duration value.

When a beacon frame including [link ID = second link, DNT = 1] is received from the AP 11, the STA 21 may determine that a transmission operation is impossible in the second link. When a beacon frame including [link ID = second link, DNT = 0] is received from the AP 11, the STA 21 may determine that a transmission operation is possible in the second link.

The AP 12 operating in the second link may transmit a PS-Poll frame indicating a specific duration before the start time of the TWT SP of the third link. The specific duration indicated by the PS-Poll frame may be same or longer than a time required to protect communication in the TWT SP of the third link. The STA 22 operating in the second link may receive the PS-Poll frame from the AP 12, may identify the specific duration indicated by the PS-Poll frame, and may set a NAV corresponding to the specific duration in the second link. Here, when a destination address of the PS-Poll frame is a broadcast address or a multicast address, the STA 22 may interpret an AID/duration field included in the PS-Poll frame as a duration value.

The STA 11 of the soft AP MLD may perform a reception operation during the TWT SP of the third link to receive data from the AP 22. In the third link, the TWP SP may be a TWT SP enabled by a trigger. In this case, the AP 22 may transmit a trigger frame to enable the TWT SP in the corresponding TWT SP of the third link. The STA 11 of the soft AP MLD may perform a monitoring operation for the trigger frame in the TWT SP of the third link. When the trigger frame is received from the AP 22, the STA 11 may transmit a PS-Poll frame to the AP 22 in response to the trigger frame. When the PS-Poll frame is received from the STA 11, the AP 22 may transmit data (e.g., DL MU PPDU) stored in its own buffer to the STA 11. When the data is received from the AP 22, the STA 11 may transmit ACK (e.g., BA) for the data to the AP 22.

In the third link, the TWP SP may not be a TWT SP enabled by a trigger. In this case, the STA 11 may transmit a PS-Poll frame to the AP 22 by performing a channel contention operation in the TWT SP of the third link. When the PS-Poll frame is received from the STA 11, the AP 22 may transmit data (e.g., DL MU PPDU) stored in its own buffer to the STA 11. When the data is received from the AP 22, the STA 11 may transmit ACK (e.g., BA) for the data to the AP 22.

The above-described operations (e.g., transmission and reception of the data frame between the STA 11 and the AP 22) may be performed within the TWT SP of the third link. If an end time of transmission/reception of the data frame in the third link is earlier than an end time of a NAV in the second link, the soft AP MLD may early terminate the NAV in the second link. For example, the AP 12 of the soft AP MLD may notify that the NAV of the second link is early terminated by transmitting a QoS Null frame or CF-End frame through the second link. The STA 22 of the STA MLD may receive the QoS Null frame or CF-End frame through the second link and may determine that the NAV is early terminated in the second link based on the received frame.

The embodiment shown in FIG. 6 may be applied to not only downlink communication (e.g., downlink communication between the soft AP MLD performing AP functions and the STA) but also uplink communication (e.g., the soft AP MLD performing STA functions and the AP).

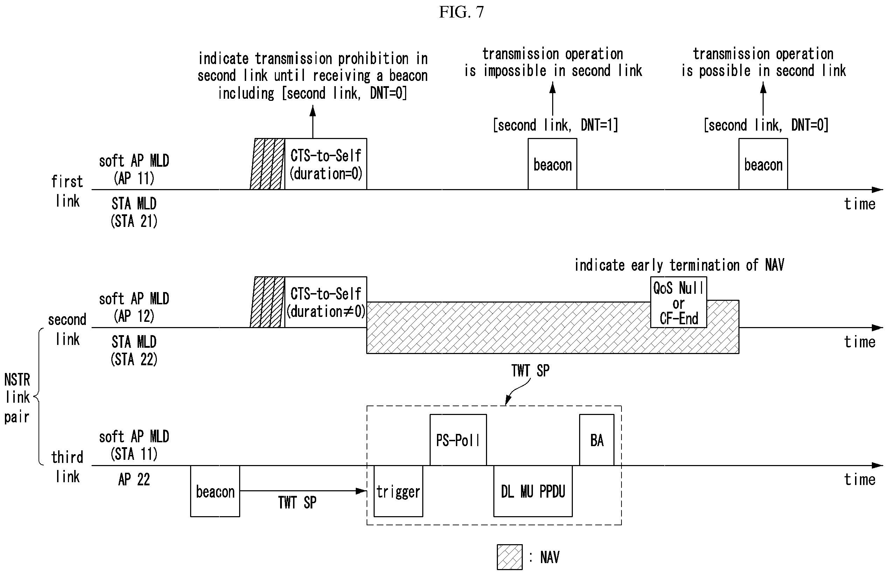

FIG. 7 is a timing diagram illustrating a third embodiment of a communication method in an NSTR link in a wireless LAN system supporting multiple links.

As shown in FIG. 7, a soft AP MLD may support multiple links (e.g., first link, second link, and third link) and may perform AP functions and STA functions. A link in which the soft AP MLD performing AP functions operates may be the same as a link in which the soft AP MLD performing STA functions operates. In another embodiment, the link in which the soft AP MLD performing AP functions operates may be different from the link in which the soft AP MLD performing STA functions operates. The soft AP MLD may perform AP functions in the first link and the second link. In the first link, the soft AP MLD may operate as an AP 11, and in the second link, the soft AP MLD may operate as an AP 12. The soft AP MLD may perform STA functions in the third link. In the third link, the soft AP MLD may operate as an STA 11. A pair of the second link and the third link may be an NSTR link pair. Therefore, the soft AP MLD may not be able to perform STR operations in the second link and the third link.

The AP 11 of the soft AP MLD may be associated with an STA 21 of the STA MLD in the first link, and the AP 12 of the soft AP MLD may be associated with an STA 22 of the STA MLD in the second link. In the third link, the STA 11 of the soft AP MLD may be associated with the AP 22. The STA 11 operating in the third link may know a TWT SP of the AP 22. Configuration information of the TWT SP may be transmitted through a management frame (e.g., beacon frame). In the third link, the AP 22 may transmit a beacon frame indicating that data to be transmitted to the STA 11 within the TWT SP exists. The STA 11 may receive the beacon frame from the AP 22 and may identify that data to be transmitted to the STA 11 within the TWT SP exists based on information included in the beacon frame. In another embodiment, the AP 13 of the AP MLD may configure a TWT based on the TWT SP in the third link. For example, the AP 13 of the AP MLD may transmit a management frame including configuration information of the TWT SP through the third link. In this case, the TWT SP in the third link may be configured by the AP 13 of the AP MLD instead of the AP 22. The AP 13 may be the STA 11 performing AP functions in FIG. 7.

In the above-described cases, since the STA 11 needs to perform a data reception operation during the TWT SP, the TWT SP may be an NSTR period in the third link having an NSTR relationship with the second link. The NSTR period may mean a period in which STR operations are impossible. The STR operations may be impossible even in a period of the second link, which corresponds to the TWT SP configured in the third link.

When another communication node transmits a frame in the NSTR link pair during the TWT SP, the frame of the another communication node may collide with another frame transmitted in the third link, and a transmission error may occur due to the collision between the frames. Therefore, it may be desirable that transmission operations of other communication nodes are not performed during the TWT SP. Before a start time of the TWT SP in the third link, the AP 12 of the soft AP MLD may transmit a clear-to-send (CTS) frame (e.g., CTS-to-Self frame) through the second link. A destination address (e.g., recipient address) of the CTS frame may be set to an address of the AP 12, and duration information (e.g., duration field) included in the CTS frame may indicate a length corresponding to the TWT SP in the third link. In the second link, another communication node (e.g., STA 22) may receive the CTS frame from the AP 12 and may set a NAV corresponding to the TWT SP the in the third link based on information included in the CTS frame. The duration may be set to a time required for the soft AP MLD transmitting the CTS frame. Therefore, another communication node may not perform a transmission operation during a period for which the NAV is set in the second link.

The AP 11 of the soft AP MLD may generate a CTS frame (e.g., CTS-to-Self frame) including information indicating `duration = 0' and may transmit the CTS frame in the first link. The STA 21 of the STA MLD may receive the CTS frame from the AP 11. When the duration indicated by the CTS frame is 0, the STA 21 may not set a NAV in the first link. In this case, the STA 21 may determine whether a transmission operation is possible in another link (e.g., NSTR link) based on an information element included in a beacon frame (or probe response frame) received from the AP 11. Therefore, the STA MLD (e.g., STA 21) may not be able to perform a transmission operation in another link until a beacon frame (or probe response frame) indicating that a transmission operation is possible in another link is received.

The beacon frame (or probe response frame) may include an indicator indicating whether a transmission operation is possible in each of links. For example, the beacon frame (or probe response frame) may include [link identifier (ID), DNT] for each of links. The link identifier may be used to indicate each link. The DNT set to a first value (e.g., 1) may indicate that a transmission operation is impossible in a link indicated by a link identifier associated with the corresponding DNT. The DNT set to a second value (e.g., 0) may indicate that a transmission operation is possible in a link indicated by a link identifier associated with the corresponding DNT. The DNT may be set when a transmission operation in one link causes interference on another link depending on a state of an NSTR link pair.

In the embodiment shown in FIG. 7, the soft AP MLD may perform operations to protect communications in the TWT SP of the third link. For example, the AP 11 operating in the first link may transmit a CTS frame indicating a duration set to 0 before a start time of the TWT SP of the third link, may transmit a beacon frame including [link ID = second link, DNT = 1] in a time period corresponding to the TWT SP of the third link, and may transmit a beacon frame including [link ID = second link, DNT = 0] after an end time of the TWT SP of the third link. The STA 21 operating in the first link may receive the CTS frame from the AP 11 and may identify that the duration indicated by the CTS frame is 0. In this case, the STA 21 may not set a NAV in the first link and may perform a reception operation of the beacon frame of the AP 11.

When a beacon frame including [link ID = second link, DNT = 1] is received from the AP 11, the STA 21 may determine that a transmission operation is impossible in the second link. When a beacon frame including [link ID = second link, DNT = 0] is received from the AP 11, the STA 21 may determine that a transmission operation is possible in the second link.

The AP 12 operating in the second link may transmit a CTS frame indicating a specific duration before the start time of the TWT SP of the third link. The specific duration indicated by the CTS frame may be same or longer than a time required to protect communication in the TWT SP of the third link. The STA 22 operating in the second link may receive the CTS frame from the AP 12, may identify the specific duration indicated by the CTS frame, and may set a NAV corresponding to the specific duration in the second link.

The STA 11 of the soft AP MLD may perform a reception operation during the TWT SP of the third link to receive data from the AP 22. In the third link, the TWP SP may be a TWT SP enabled by a trigger. In this case, the AP 22 may transmit a trigger frame to enable the TWT SP in the corresponding TWT SP of the third link. The STA 11 of the soft AP MLD may perform a monitoring operation for the trigger frame in the TWT SP of the third link. When the trigger frame is received from the AP 22, the STA 11 may transmit a PS-Poll frame to the AP 22 in response to the trigger frame. When the PS-Poll frame is received from the STA 11, the AP 22 may transmit data (e.g., DL MU PPDU) stored in its own buffer to the STA 11. When the data is received from the AP 22, the STA 11 may transmit ACK (e.g., BA) for the data to the AP 22.

In the third link, the TWP SP may not be a TWT SP enabled by a trigger. In this case, the STA 11 may transmit a PS-Poll frame to the AP 22 by performing a channel contention operation in the TWT SP of the third link. When the PS-Poll frame is received from the STA 11, the AP 22 may transmit data (e.g., DL MU PPDU) stored in its own buffer to the STA 11. When the data is received from the AP 22, the STA 11 may transmit ACK (e.g., BA) for the data to the AP 22.

The above-described operations (e.g., transmission and reception of the data frame between the STA 11 and the AP 22) may be performed within the TWT SP of the third link. If an end time of transmission/reception of the data frame in the third link is earlier than an end time of a NAV in the second link, the soft AP MLD may early terminate the NAV in the second link. For example, the AP 12 of the soft AP MLD may notify that the NAV of the second link is early terminated by transmitting a QoS Null frame or CF-End frame through the second link. The STA 22 of the STA MLD may receive the QoS Null frame or CF-End frame through the second link and may determine that the NAV is early terminated in the second link based on the received frame.

The embodiment shown in FIG. 7 may be applied to not only downlink communication (e.g., downlink communication between the soft AP MLD performing AP functions and the STA) but also uplink communication (e.g., the soft AP MLD performing STA functions and the AP).

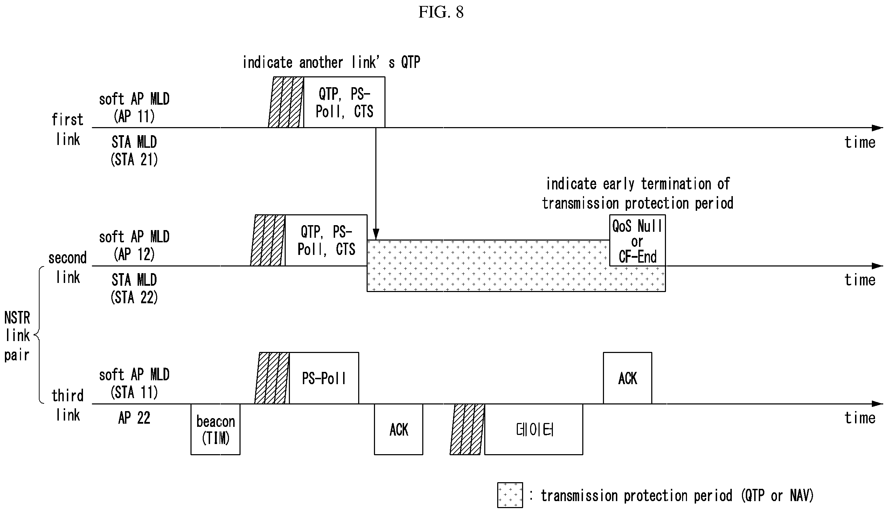

FIG. 8 is a timing diagram illustrating a fourth embodiment of a communication method in an NSTR link in a wireless LAN system supporting multiple links.

As shown in FIG. 8, a soft AP MLD may support multiple links (e.g., first link, second link, and third link) and may perform AP functions and STA functions. A link in which the soft AP MLD performing AP functions operates may be the same as a link in which the soft AP MLD performing STA functions operates. In another embodiment, the link in which the soft AP MLD performing AP functions operates may be different from the link in which the soft AP MLD performing STA functions operates. The soft AP MLD may perform AP functions in the first link and the second link. In the first link, the soft AP MLD may operate as an AP 11, and in the second link, the soft AP MLD may operate as an AP 12. The soft AP MLD may perform STA functions in the third link. In the third link, the soft AP MLD may operate as an STA 11. A pair of the second link and the third link may be an NSTR link pair. Therefore, the soft AP MLD may not be able to perform STR operations in the second link and the third link.

The AP 11 of the soft AP MLD may be associated with an STA 21 of the STA MLD in the first link, and the AP 12 of the soft AP MLD may be associated with an STA 22 of the STA MLD in the second link. In the third link, the STA 11 of the soft AP MLD may be associated with the AP 22. The AP 22 may transmit a beacon frame including a traffic indication map (TIM) in the third link. The STA 11 of the soft AP MLD may receive the beacon frame from AP 22 in the third link and may identify the TIM included in the beacon frame. When a bit corresponding to the STA 11 among bits included in the TIM (e.g., bitmap) is set to a first value (e.g., 1), the STA 11 may determine that the AP 22 has data to be transmitted to the STA 11. In this case, the STA 11 of the soft AP MLD may transmit a PS-Poll frame by performing a channel contention operation in the third link. The PS-Poll frame may be transmitted to receive the data stored in the AP 22. In addition, the PS-Poll frame may indicate that the STA 11 exists. When the PS-Poll frame is received from the STA 11, the AP 22 may transmit ACK for the PS-Poll frame in the third link. When the ACK for the PS-Poll frame is received from the AP 22, the STA 11 may determine that the PS-Poll frame has been successfully received at the AP 22.

After transmitting the ACK for the PS-Poll frame, the AP 22 may transmit a data frame to the STA 11 in the third link. When the ACK for the PS-Poll frame is received, the STA 11 may receive the data frame from the AP 22 by performing a data frame reception operation in the third link. The STA 11 may transmit ACK for the data frame in the third link. When the ACK for the data frame is received from the STA 11, the AP 22 may determine that the data frame has been successfully received at the STA 11.

Since a pair of the second link and the third link is an NSTR link pair, a procedure for prohibiting transmission in the second link may be performed in order to protect a data transmission/reception operation in the third link. For example, the soft AP MLD may transmit the QTP frame shown in FIG. 5, the PS-Poll frame shown in FIG. 6, or the CTS frame (e.g., CTS-to-Self frame) shown in FIG. 7 to prohibit a transmission operation in the second link. The transmission operation in the second link may be prohibited for a time required for the data transmission/reception operation in the third link. In addition, the soft AP MLD may transmit the QTP frame shown in FIG. 5, the PS-Poll frame shown in FIG. 6, the CTS frame shown in FIG. 7, or the beacon frame including [link ID, DNT] in the first link to indicate that a transmission operation is prohibited in the second link.

The soft AP MLD may not know a time required for the data transmission/reception in the third link until the PS-Poll frame is received in the third link. Accordingly, the soft AP MLD may configure a period (e.g., QTP or NAV) for protecting transmission in the third link to be long. When the data transmission/reception operation is early terminated in the third link, the soft AP MLD (e.g., AP 22) may transmit a QoS Null Frame, CF-End frame, or QTP frame indicating that QTP is 0 (e.g., duration = 0) to early terminate the QTP or NAV set in the second link.

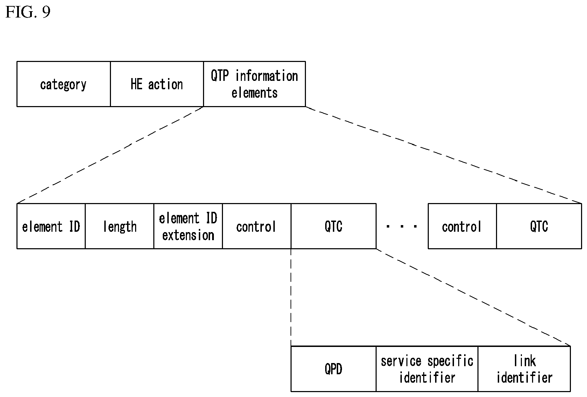

FIG. 9 is a block diagram illustrating a first embodiment of a QTP frame.

As shown in FIG. 9, a QTP frame may be an action frame. In another embodiment, the QTP frame may be a beacon frame or a probe response frame. The QTP frame shown in FIG. 9 may be the QTP frame used in the embodiments shown in FIGS. 5 and 8. The QTP frame may include `category', `HE action', and `QTP information elements'. When an action frame is the QTP frame, the HE action may be set to 1. The QTP information elements may include one or more quiet time contents (QTCs). The QTC may include a quiet period duration (QPD), a service specific identifier, and a link identifier (e.g., link bitmap, link ID). For relay operations in multiple links, a 'control' included in the QTP information elements may be set to 0, and a QTP setup may be extended. The QTP setup may include a link identifier, and the link identifier may indicate a link in which a QTP is configured. The link identifier may be a link bitmap or a link ID.

The embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those who have ordinary skill in the art.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above hardware device can be configured to operate as at least one software module in order to perform the embodiments of the present disclosure, and vice versa.

While the embodiments of the present disclosure and their advantages have been described in detail, it should be understood that various changes, substitutions, and alterations may be made herein without departing from the scope of the present disclosure.

## Claims

1. An operation method of a device supporting a multi-link in a wireless local area network (LAN), the operation method comprising:
configuring a target wake time (TWT) based on a TWT service period (SP) in a first link of the multi-link;
transmitting a first frame including information of a first period in which transmission is prohibited in a second link of the multi-link; and
performing communication within the TWT SP configured in the first link,
wherein the first period overlaps with the TWT SP, and
wherein communication is not performed within the first period configured in the second link.

2. The operation method according to claim 1, wherein a pair of the first link and the second link is a non-simultaneous transmit and receive (NSTR) link pair.

3. The operation method according to claim 1, wherein
the information of the first period is configuration information of a quiet time period (QTP), and
the configuration information of the QTP includes at least one of information indicating a link in which the QTP is configured, information on a start time of the QTP, information on an end time of the QTP, or information on a length of the QTP.

4. The operation method according to claim 1, wherein the information of the first period is duration information used to set a network allocation vector (NAV) in the second link.

5. The operation method according to claim 1, wherein the first period includes a start time of the TWT SP.

6. The operation method according to claim 1, further comprising, when communication is terminated within the TWT SP and the first period is not terminated, transmitting a second frame indicating early termination of the first period through the second link.

7. A device supporting a multi-link in a wireless local area network (LAN), comprising:
a processor; and
a memory storing at least one instruction executable by the processor,
wherein the at least one instruction is executed to
configure a target wake time (TWT) based on a TWT service period (SP) in a first link of the multi-link,
transmit a first frame including information of a first period in which transmission is prohibited in a second link of the multi-link, and
perform communication within the TWT SP configured in the first link,
wherein the first period overlaps with the TWT SP, and
wherein communication is not performed within the first period configured in the second link.

8. The device according to claim 7, wherein a pair of the first link and the second link is a non-simultaneous transmit and receive (NSTR) link pair.

9. The device according to claim 7, wherein
the information of the first period is configuration information of a quiet time period (QTP), and
the configuration information of the QTP includes at least one of information indicating a link in which the QTP is configured, information on a start time of the QTP, information on an end time of the QTP, or information on a length of the QTP.

10. The device according to claim 7, wherein the information of the first period is duration information used to set a network allocation vector (NAV) in the second link.

11. The device according to claim 7, wherein the first period includes a start time of the TWT SP.

12. The device according to claim 7, wherein the at least one instruction is further executed to, when communication is terminated within the TWT SP and the first period is not terminated, transmit a second frame indicating early termination of the first period through the second link.
